# EUROPEAN PATENT SPECIFICATION

(11) **EP 2 063 346 B1**
(45) Date of publication and mention of the grant of the patent: **14.06.2017**
(21) Application number: 08169546.2
(22) Date of filing: 20.11.2008
(51) Int. Cl.: H04B 13/00, G06F 3/041, G06F 21/44

(54) **Device identification method and apparatus, device information provision method and apparatus, and computer-readable recording mediums having recorded thereon programs for executing the device identification method and the device information provision method**
Vorrichtungsidentifizierungsverfahren und -gerät, Vorrichtungsinformationsbereitstellungsverfahren und -gerät und computerlesbares Aufzeichnungsmedium mit Programmen darauf zur Ausführung des Verfahrens zur Vorrichtungsidentifizierung und des Bereitstellungsverfahrens der Vorrichtungsinformation
Procédé et dispositif d'identification d'appareil , procédé et dispositif de fourniture d'information sur l'appareil , et supports d'enregistrement lisibles sur ordinateur disposant des programmes enregistrés dessus pour l'exécution du procédé d'identification d'appareil et le procédé de fourniture d'informations sur l'appareil

(30) Priority: 20.11.2007 KR 20070118531; 18.09.2008 KR 20080091774
(43) Date of publication of application: 27.05.2009
(73) Proprietor: Samsung Electronics Co., Ltd., Suwon-si, Gyeonggi-do, 443-742 (KR)
(72) Inventor: Han, Kuk-hyun, Gyeonggi-do (KR); Yang, Pil-seung, Gyeonggi-do (KR); Kim, Hark-joon, Gyeonggi-do (KR)
(74) Representative: Appleyard Lees IP LLP

(56) References cited:
- EP-A1- 1 564 917
- WO-A1-2006/087670
- JP-A- 2007 020 895
- US-A1- 2002 122 064
- US-A1- 2004 189 594
- US-A1- 2005 017 841
- US-A1- 2006 245 621

## Description

### BACKGROUND OF THE INVENTION

### 1. Field of the Invention

The present invention relates to a method and apparatus for identifying a device and providing device information based on a touch screen and a recording medium, and more particularly, to a method and apparatus for identifying a device and providing device information based on a touch screen and a recording medium whereby the touch screen device can identify an external device such as a cellular phone, a digital camera, a camcorder, and a personal digital assistant (PDA) according to a user's manipulation, and computer-readable recording medium having recorded thereon programs for executing the above method.

### 2. Description of the Related Art

In order to technically implement a scenario in which a touch screen device and an external device interact with each other, the external device should be easily connectable to the touch screen device, and preferably the external device has to be connected in relation to coordinates on a graphic user interface (GUI) of the touch screen device.

A related art technique for a display device to identify an external device includes a radio frequency identification (RFID) scheme, a camera scheme, and a global positioning system (GPS) scheme. According to the RFID scheme, a tag reader is installed outside the display device and an RFID tag is attached to the external device in order to recognize an identification (ID) of the external device. According to the camera scheme, a camera is attached on or under a table display in order to recognize the position of the external device. According to the GPS scheme, the position of the external device is recognized using a GPS receiver.

However, the position of the external device cannot be known according to the RFID scheme, a recognition rate is low and high processor performance is required due to image processing according to the camera scheme, and a position error and device complexity increase in a small space such as the display device according to the GPS scheme.

Moreover, when the size of a touch screen surface is small, the external device and the touch screen device have to easily interact with each other. Therefore JP 2007020895 discloses a device identification apparatus and method for a touch screen device to identify an external device (membership card 110) on a touch screen device via a person's body when the person is touching it. The touch panel has a "conductive touch electrode" and comprises a dedicated transmitter for communication with the external device via the person's body.

WO2006087670 discloses to establish a secure network connection of two devices by use of intra-body communication when a user touches simultaneously two "touch interfaces" (transmitter 2 and receiver 6), which are primarily simple electrodes forming a capacitor with dedicated signal generator and modulator. This document mentions that these electrodes may be a authentication device, e.g. a fingerprint sensor. However for said fingerprint sensor the generation of the signal to be sent through the user's body remains completely open.

### SUMMARY OF THE INVENTION

The present invention provides a touch-screen based device identification method and apparatus in order to connect a touch screen device with an external device by simple physical touching, and a computer-readable recording medium having recorded thereon a program for executing the touch-screen based device identification method.

According to an aspect of the present invention, there is provided a device identification method for a touch screen device, the device identification method including: propagating a signal induced by touching a touch screen surface of the touch screen device to an external device through a person; receiving, at the touch screen device, information about the signal which is detected by the external device and an identification (ID) of the external device through a communication channel; and identifying, at the touch screen device, the external device based on the received information about the detected signal and the received ID of the external device.

The signal is a micro-current signal including a scan frequency component.

The identifying the external device may include determining that the touch screen device is connected with the external device having the received ID via the person if a scan frequency component included in the information about the signal is the same as a scan frequency component of the signal induced by touching the touch screen surface.

The device identification method may further include: calculating first coordinates of the touched touch screen surface; and mapping the identified external device to the calculated first coordinates of the touched touch screen surface.

The device identification method may further include: when user verification information is stored in the external device, executing a user verification for allowing the external device to access the touch screen device or to access an object displayed on the first coordinates using the user verification information.

The external device may be another touch screen device in addition to the touch screen device, and the device identification method may further include: calculating first coordinates of the touched touch screen surface; and mapping second coordinates of the touched touch screen surface of another touch screen surface to the first coordinates, and the mapping may be performed through the communication channel.

The external device or the touch screen device may execute application services, which link the first coordinates with the second coordinates, based on the mapping result.

The device identification method may further include repeating the propagating the signal to the external device and the receiving the information through the communication channel after changing a scan frequency of the signal.

The device identification method may further include: receiving a confirmation request signal for identifying whether the touch screen surface of the touch screen device is touched or not from the external device through the communication channel; and transmitting a confirmation response signal which denotes that the touch screen surface of the touch screen device is touched to the external device through the communication channel.

The communication channel may be a wired or wireless channel using a plug and play (PnP) protocol including a universal PnP (UPnP) protocol.

The communication channel may be a wireless communication channel, and the wireless communication channel may include one or more selected from a wireless local area network (LAN), a wireless internet platform for interoperability (WIPI), Bluetooth, infrared communication, near field communication (NFC), and Zigbee, and the external device may exchange information about the wireless communication channel with the touch screen device.

The external device may be one of a cellular phone, a digital camera, a camcorder, a personal digital assistant, an MP3 player, and a portable multimedia player.

According to another aspect of the present invention, there is provided a device identification apparatus for a touch screen device, the device identification apparatus including: a touch sensing unit which generates a signal induced by touching a touch screen surface of the touch screen device, wherein the signal is a micro-current signal including a scan frequency component; a reception unit which receives information about the signal propagated to an external device through a person and detected by the external device and an identification (ID) of the external device through a communication channel; and an identification unit which identifies the external device based on the received information about the signal and the received ID of the external device.

According to another aspect of the present invention, there is provided a device information provision method for an external device, the device information provision method including: detecting a scan frequency component from a signal induced by touching a touch screen surface of a touch screen device and propagated to the external device through the person; generating information about the scan frequency component and identification (ID) information of the external device; and transmitting the information about the scan frequency component and the ID information from the external device to the touch screen device through a communication channel.

According to another aspect of the present invention, there is provided a device information provision apparatus for an external device, the device information provision apparatus including: a detection unit which detects a scan frequency component from a signal induced by touching a touch screen surface of a touch screen device and propagated to the external device through the person; an information generation unit which generates information about the scan frequency component and identification (ID) information of the external device; and a transmission unit which transmits the information about the scan frequency component and the ID information to a touch screen device through a communication channel.

According to another aspect of the present invention, there is provided a computer-readable recording medium having recorded thereon a program for executing a device identification method for a touch screen device, the device identification method including: propagating a signal induced by touching a touch screen surface of the touch screen device to an external device through the person, wherein the signal is a micro-current signal including a scan frequency component; receiving, at the touch screen device, information about the signal which propagated to and detected by the external device and an identification (ID) of the external device through a communication channel; and identifying, at the touch screen device, the external device based on the received information about the detected signal and the received ID of the external device.

According to another aspect of the present invention, there is provided a computer-readable recording medium having recorded thereon a program for executing a device information provision method for an external device, the device information provision method including: detecting, at the external device, a scan frequency component from a signal induced by touching a touch screen surface of a touch screen device and propagated to the external device through the person; generating, at the external device, information about the scan frequency component and identification (ID) information of the external device that has received the signal; and transmitting the information about the scan frequency component and the ID information from the external device to the touch screen device through a communication channel.

According to embodiments of the present invention, the external device detects the scan frequency component induced on the touch screen surface by touching the touch screen surface via the person, and thus, the touch screen device and the external device can be connected to each other in real time by a simple physical touch.

### BRIEF DESCRIPTION OF THE DRAWINGS

The above and other features and advantages of the present invention will become more apparent by describing in detail exemplary embodiments thereof with reference to the attached drawings in which:
FIG. 1 illustrates a touch-screen based device identification system according to a first exemplary embodiment of the present invention;
FIG. 2 illustrates a touch-screen based device identification system according to a second exemplary embodiment of the present invention;
FIG. 3 illustrates a touch-screen based device identification system according to a third exemplary embodiment of the present invention;
FIG. 4 is a block diagram of a touch-screen based device identification system according to an exemplary embodiment of the present invention;
FIG. 5 is a flowchart illustrating a touch-screen based device identification method for a touch screen device according to an exemplary embodiment of the present invention;
FIG. 6 is a flowchart illustrating a device information provision method for an external device according to another exemplary embodiment of the present invention; and
FIG. 7 illustrates a touch-screen based device identification system according to a fourth exemplary embodiment of the present invention.

### DETAILED DESCRIPTION OF THE INVENTION

Hereinafter, exemplary embodiments of the present invention will be described in detail with reference to the accompanying drawings. It should be noted that like reference numerals refer to like elements illustrated in one or more of the drawings. In the following description of the present invention, detailed descriptions of known functions and configurations incorporated herein will be omitted for conciseness and clarity.

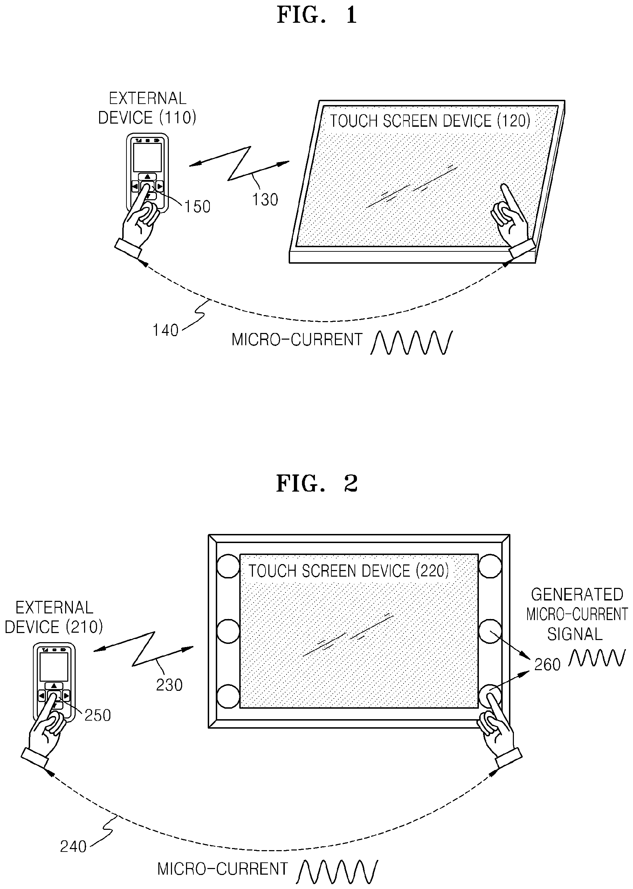

FIG. 1 illustrates a touch-screen based device identification system according to a first exemplary embodiment of the present invention.

Referring to FIG. 1, the touch-screen based device identification system includes an external device 110 and a touch screen device 120. The external device 110 and the touch screen device 120 are connected with each other through a communication channel 130. It is assumed that a person 140 touches a touch screen surface of the touch screen device 120 with one hand while holding the external device 110 with the other hand. In another exemplary embodiment of the present invention, a person 140 may touch a touch screen surface of the touch screen device 120 by means of using a conductive medium such as metal.

The external device 110 is a consumer electronics (CE) device capable of communicating with another device through the communication channel 130. The external device 110 may be a cellular phone, a digital camera, a camcorder, a personal digital assistant (PDA), an MP3 player, or a portable multimedia player (PMP). In another exemplary embodiment of the present invention, the external device 110 may be another touch screen device in addition to the touch screen device 120.

A signal induced by touching a touch screen surface of the touch screen device 120 propagates to the external device 110 via the person 140. A detection unit 150 of the external device 110 detects a scan frequency component from the signal induced by a touch of the touch screen surface in the touch screen device 120.

Upon detection of the scan frequency component, the external device 110 generates information about the detected scan frequency component and ID information of the external device 110 and transmits the generated information and ID information to the touch screen device 120 through the communication channel 130. The external device 110 may include a band pass filter for detecting a micro-current signal that is induced from the touch screen surface and is received via the person 140. The micro-current signal propagating to the external device 110 is detected after passing through the band pass filter of the external device 110.

The touch screen device 120 is a device capable of performing specific processing by recognizing the position of a character or a particular position on the touch screen surface, which is touched by a human hand, without using a keyboard. A touch-screen scheme may be classified into types including a resistive film type and a static capacitance type. According to the static capacitance type, the touch screen surface is electrically charged, sensors are installed along the circumference of the touch screen surface, and a touched position is recognized by sensing the amount of electric charges lost by a touch.

Herein, the touch screen device 120 may be adapted by the static capacitance type. According to the static capacitance type, the touch screen device 120 performs a periodic scan in order to sense a touch. However, the touch screen device 120 is not limited to the static capacitance type, and may include all kinds of devices, in which micro-current signals including a certain frequency (for example, scan frequency) are induced when the touch screen surface is touched.

According to the static capacitance type, the touch screen device 120 performs scanning operation regularly to sense the touch. Thus, when the person 140 touches the touch screen surface of the touch screen device 120 with one hand while holding the external device 110 with the other hand, a micro-current including a particular frequency, e.g., a scan frequency, is induced by touching the touch screen surface. A micro-current signal including a scan frequency component, induced by touching the touch screen surface propagates to the external device 110 via the person 140.

The touch screen device 120 also receives information about the scan frequency component detected by the detection unit 150 and an ID of the external device 110 from the external device 110 through the communication channel 130. The touch screen device 120 recognizes that it is connected with the external device 110 via the person 140 by using the information about the detected scan frequency component and the ID of the external device 110, which are received from the external device 110.

In addition, in order to distinguish the touch screen device 120 that propagates the induced signal from a plurality of touch screen devices, the external device 110 may broadcast confirmation request signals, which identify whether the touch screen surface of the touch screen device 120 is touched or not, to a plurality of touch screen devices through communication channels. Then, the touch screen device 120, which propagates the signal induced by touching the touch screen surface to the external device 110, may transmit a confirmation response signal that notifies the touch to the touch screen surface to the external device 110 through the communication channel 130. The other touch screen devices, touch screen surfaces of which are not touched, may not transmit the confirmation response signal to the external device 110.

The communication channel 130 is a data transmission/reception path that is previously established before the person 140 touches the external device 110 and the touch screen device 120. Thus, the external device 110 and the touch screen device 120 are in a state where they can exchange data through the communication channel 130 whenever needed.

The communication channel 130 is a local connection using a plug-and-play (PnP) protocol such as a universal PnP (UPnP) protocol and may be a wired or wireless channel. In addition, the communication channel 130 may be wireless communication channel, and the wireless communication channel may include one or more of a wireless local area network (LAN), a wireless internet platform for interoperability (WIPI), Bluetooth, infrared communication, near field communication (NFC), and Zigbee.

In addition, the external device 110 exchanges information about the communication channel (for example, wireless communication channel) with the touch screen device 120, and may communicate through the selected communication channel based on the exchanged information. For example, when the external device 110 or the touch screen device 120 includes a plurality of communication channels, the external device 110 notifies the touch screen device 120 of the communication channels included in the external device 110, and the touch screen device 120 may select the appropriate communication channel by comparing the communication channels of the external device 110 with the communication channels of the touch screen device 120.

The person 140 can cause the external device 110 and the touch screen 120 to interact with each other by touching the touch screen surface of the touch screen device 120 with one hand while holding the external device 110 with the other hand. Since a human body is composed mostly of water including salt, the human body generally has the characteristics of a conductor at tens of KHz. Thus, a micro-current signal may propagate between the external device 110 and the touch screen 120 via the body of the person 140 who touches the external device 110 and the touch screen 120. In this state, the touch screen device 120 acts as if a position touched by the hand of the person 140 is touched by the external device 110 and can perform particular processing. That is, the touch screen device 120 calculates the first coordinates of the touched point on the touch screen surface, and then, maps the external device 110 to the first coordinates. Here, mapping allows various applications to be executed as if the external device 110 touches the first coordinates.

In addition, when the external device 110 stores personal information or verification information (hereinafter, referred to as 'user verification information'), services that allow the external device to access the touch screen device 120 or allow the external device to access the object displayed on the first coordinates of the touch screen device 120 can be provided using the user verification information.

In addition, as described above, the external device 110 may be another touch screen device in addition to the touch screen device 120.

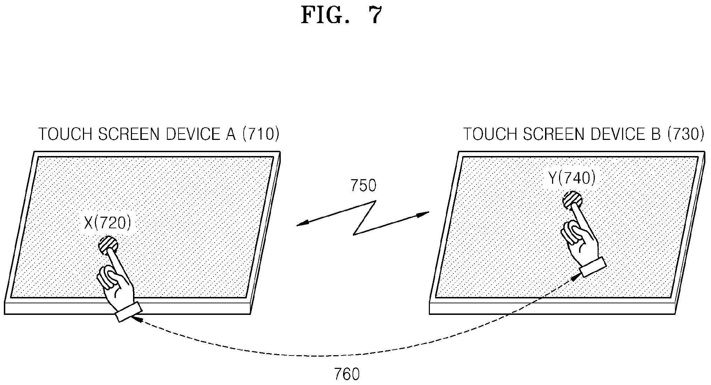

FIG. 7 illustrates that the external device 110 is another touch screen device. Referring to FIG. 7, processes for a touch screen device A 710 to identify a touch screen device B 730 via person 760 (or opposite processes) are similar to those of the embodiment shown in FIG. 1. however, the touch screen devices A and B 710 and 730 may include detection units for detecting signals that are induced on touch screen surfaces of the counterpart touch screen devices 710 or 730 and are propagated. The detection units may be installed in the touch screen surface or on a position separated from the touch screen surface. The detection of the induced signals is described already with reference to FIG. 1, and thus, detailed descriptions thereof are omitted.

The touch screen device A 710 calculates first coordinates X 720 that represent touched location on the touch screen surface of the touch screen device A 710, and the touch screen device B 730 calculates second coordinates Y 740 that represent touched location on the touch screen surface of the touch screen device B 730. After that, the touch screen devices A and B 710 and 730 may perform the mapping operation of the first and second coordinates X 720 and Y 740 through a communication channel 750. Then, the touch screen devices A 710 and B 730 may execute an application service that links the first coordinates X 720 with the second coordinates Y 740 based on a result of the mapping operation. Through the above linkage between the coordinates, application services according to states of the touch screen devices and intention of the user can be provided.

For example, the touch screen device A 710 may transmit a control signal for allowing the object displayed on the first coordinates X 720 of the touch screen device A 710 (for example, icons, characters, products, or colors) to be displayed on the second coordinates Y 740 of the touch screen device 730 to the touch screen device B 730, or receives the control signal from the touch screen device B 730. For example, the color represented on the first coordinates X 720 may be equally displayed on the second coordinates Y 740, and the product displayed on the first coordinates X 720 may be moved to the second coordinates Y 740. On the other hand, the color represented on the second coordinates Y 740 may be equally displayed on the first coordinates X 720, and the product displayed on the second coordinates Y 740 may be moved to the first coordinates X 720.

Otherwise, a user interface such as a pop-up menu may be displayed in the touch screen devices, and thus, the user of the touch screen device A 710 or the touch screen device B 730 may select one of a plurality of services, coordinates of which can be linked with each other.

FIG. 2 illustrates a touch-screen based device identification system according to a second exemplary embodiment of the present invention.

An external device 210, a communication channel 230, a person 240, and a reception unit 250, which are illustrated in FIG. 2, operate in the same manner respectively as the external device 110, the communication channel 130, the person 140, and the detection unit 150, which are illustrated in FIG. 1, and thus will not be described again.

While the touch screen device 120 illustrated in FIG. 1 operates by touching the touch screen surface, a touch screen device 220 illustrated in FIG. 2 operates by touching one of touch spots 260 installed along the circumference of the touch screen device 220. In other words, the touch screen 220 illustrated in FIG. 2 operates by a touch to the touch spot 260 instead of to the touch screen surface.

The person 240 indicates a particular position on the touch screen surface by touching the touch spot 260 in order to cause the touch screen device 220 to perform particular processing. The touch spot 260 is designed so that a micro-current having a scan frequency component can flow through the touch spot 260. Thus, once the person 240 touches the touch spot 260, a micro-current signal propagates to the external device 210 via the person 240. The touch screen device 220 receives information about the scan frequency component and an ID of the external device 210 from the external device 210.

Consequently, if the person 240 touches the touch spot 260 of the touch screen device 220 with one hand, the touch screen device 220 can recognize that it is connected with the external device 210 the person 240 holds with the other hand.

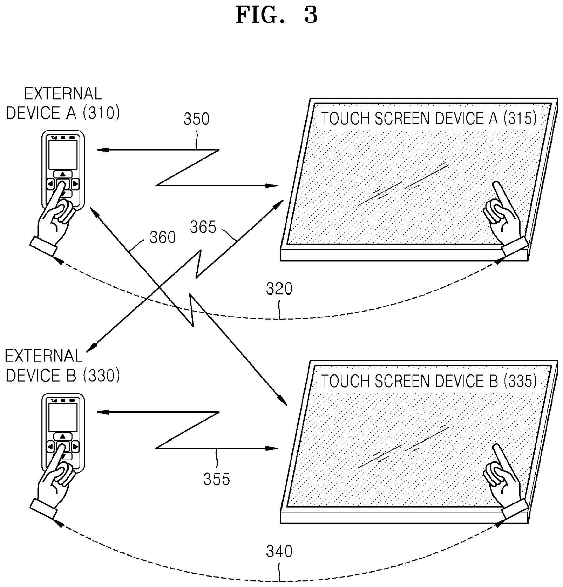

FIG. 3 illustrates a touch-screen based device identification system according to a third exemplary embodiment of the present invention, in which there exists a plurality of external devices 310 and 330 or a plurality of touch screen devices 315 and 335.

For example, it is assumed that a person A 320 holds an external device A 310 with one hand and touches a touch screen device A 315 with the other hand. It is also assumed that a person B 340 holds an external device B 330 with one hand and touches a touch screen device B 335 with the other hand. If the person A 320 and the person B 340 touch the touch screen device A 315 and the touch screen device B 335, respectively, at almost the same time, the external devices A 310 and B 330 transmit information about scan frequency components and an ID of the external devices 310 and 320 to the touch screen device 315 and the touch screen device B 335 through communication channels 350 and 360 and communication channels 355 and 365, respectively. However, if scan frequencies of micro-current signals induced in the touch screen devices A 315 and B 335 are the same as each other, the touch screen device A 315 or B 335 cannot recognize which one of the external devices A 310 and B 330 it is connected with.

In this case, the touch screen device A 315 or B 335 may be designed in such a way as to change a scan frequency of a micro-current signal induced by touching a touch screen surface. For example, when the touch screen device A 315 or B 335 receives scan frequency information and an ID from the plurality of external devices 310 and 330 within a predetermined period of time, the touch screen device A 315 or B 335 temporarily changes a scan frequency. The touch screen device A 315 or B 335 then receives scan frequency information corresponding to the changed scan frequency and an ID from the external devices 310 and 330 again. However, if both the touch screen device A 315 and the touch screen device B 335 change scan frequencies to another same frequency, the problem described above may occur again. This problem may be solved by using a method of randomly determining a point of time for changing the scan frequency of the touch screen device A 315 or B 335 within a predetermined time range. However, in order to prevent the scan frequencies of the touch screen device A 315 and the touch screen device B 335 from being simultaneously changed to another same scan frequency, various methods may be used without being limited to the method described above.

Subsequently, the touch screen device A 315 or B 335 can identify the external device 310 or 330 connected with the touch screen device A 315 or B 335 by temporarily changing the scan frequency of the touch screen device A 315 or B 335.

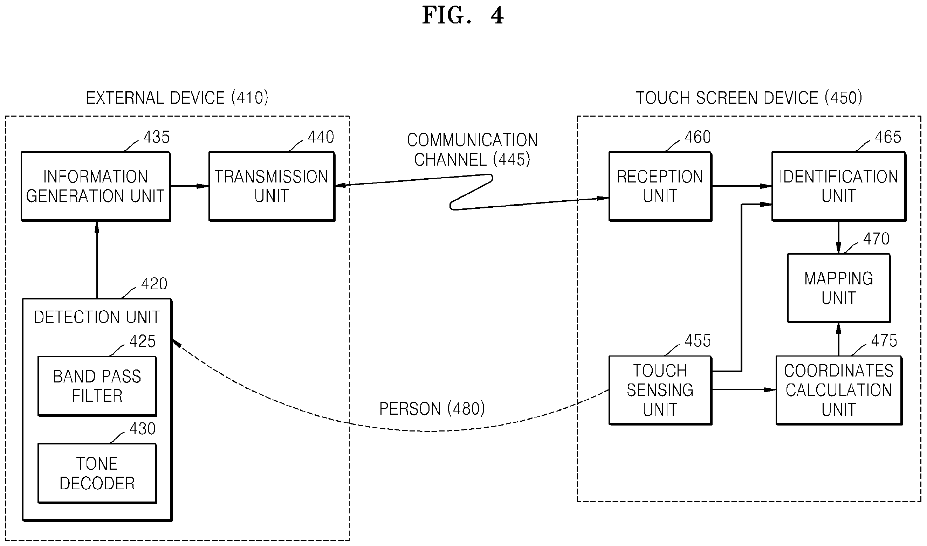

FIG. 4 is a block diagram of a touch-screen based device identification system according to an exemplary embodiment of the present invention.

Referring to FIG. 4, the touch-screen based device identification system includes an external device 410 and a touch screen device 450. The external device 410 and the touch screen device 450 are connected with each other through a communication channel 445. A person 480 touches a detection unit 420 of the external device 410 with one hand and touches a touch sensing unit 455, i.e., a touch screen surface, of the touch screen device 450 with the other hand.

The touch screen device 450 may include the touch sensing unit 455, a reception unit 460, and an identification unit 465. The touch screen device 450 may further include a mapping unit 470 and a coordinates calculation unit 475.

The touch sensing unit 455 generates a signal induced by touching the touch screen surface. The induced signal is a micro-current signal including a scan frequency component and propagates to the detection unit 420 of the external device 410 via the person 480.

The touch sensing unit 455 can temporarily change a scan frequency of the micro-current signal induced by touching the touch screen surface. An objective that can be achieved by changing the scan frequency has already been described and thus will not be further described here.

The reception unit 460 receives information about the scan frequency component detected by the external device 410 and an ID of the external device 410 through the communication channel 445.

The identification unit 465 identifies the external device 410 by using the information about the scan frequency component and the ID of the external device 410, which are received by the reception unit 460. For example, the identification unit 465 determines a scan frequency based on the information about the scan frequency component and compares the determined scan frequency with a scan frequency of the micro-current signal induced by a touch. If the determined scan frequency is the same as the scan frequency of the induced micro-current signal, the identification unit 465 determines that the touch screen device 450 is connected with the external device 410 having the received ID. Information about the scan frequency of the micro-current signal induced by a touch of the person 480 may be received from the touch sensing unit 455 or may be stored in the identification unit 465.

The coordinates calculation unit 475 calculates coordinates of the touch screen surface touched (that is, first coordinates).

The mapping unit 470 maps the coordinates of the touch screen surface touched to the identified external device 410. By doing so, the touch screen device 450 can act as if a position touched by a hand of the person 480 is touched using the external device 41 and can perform particular processing.

The external device 410 includes a detection unit 420, an information generation unit 435, and a transmission unit 440. The external device 410 may be, for example, a cellular phone, a digital camera, a camcorder, a PDA, an MP3 player, or a PMP.

The detection unit 420 detects a scan frequency component from a micro-current signal propagating from the touch sensing unit 455 and transmits the detected scan frequency component to the information generation unit 435. For example, the detection unit 420 may include a band pass filter 425 and a tone decoder 430. The band pass filter 425 performs band pass filtering on the micro-current signal by using a scan frequency as a center frequency. The tone decoder 430 performs tone-decoding on the band-pass filtered signal output from the band pass filter 425. As a result, the detection unit 420 outputs information indicating whether the scan frequency component is included in the micro-current signal.

The information generation unit 435 generates information about the scan frequency component and ID information of the external device 435 that has received the micro-current signal. The information generation unit 435 previously stores the ID information of the external device 410.

The transmission unit 440 transmits the information about the scan frequency component and the ID information of the external device 410 to the reception unit 460 of the touch screen device 450 through the communication channel 445.

In addition, the external device 410 may be another touch screen device in addition to the touch screen device 450. In this case, the mapping unit 470 may map the second coordinates of the external device 410 to the first coordinates of the touch screen device 450. The mapping unit 470 may perform the mapping operation through the communication channel 445.

In addition, the mapping unit 470 may control a control signal, which allows the object displayed on the first coordinates to be displayed on the second coordinates, transmitted to the external device 410 or received from the external device 410. Consequently, the external device 410 or the touch screen device 450 may execute various application services caused by the linkage between the first and second coordinates based on the mapping result.

The communication channel 445 may be a wired or wireless channel using a PnP protocol such as an UPnP protocol.

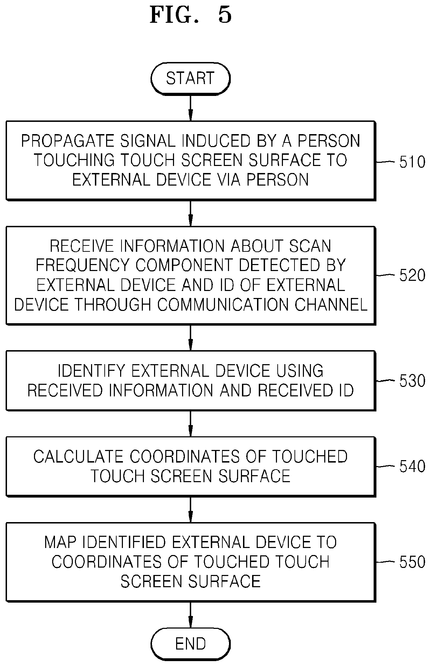

FIG. 5 is a flowchart illustrating a touch-screen based device identification method for a touch screen device according to an exemplary embodiment of the present invention.

Referring to FIG. 5, in operation 510, the touch screen device propagates a micro-current signal, including a scan frequency component, induced by touching a touch screen surface to an external device via a person. The external device may be, for example, a cellular phone, a digital camera, a camcorder, a PDA, an MP3 player, or a PMP. The touch screen device may temporarily change a scan frequency of a micro-current induced by touching the touch screen surface.

In operation 520, receives information about the scan frequency component detected by the external device and an ID of the external device from the external device through a communication channel. The communication channel may be a wired or wireless channel using a PnP protocol such as an UPnP protocol.

In operation 530, the touch screen device identifies the external device by using the received information about the scan frequency component and the received ID of the external device. For example, the touch screen device may determine that it is connected with the external device having the received ID if the received information about the scan frequency component is the same as a scan frequency component of the signal induced by a touch.

In operation 540, the touch screen device calculates coordinates of the touched touch screen surface.

In operation 550, the touch screen device maps the external device identified in operation 530 to the calculated coordinates of the touched touch screen surface.

In addition, the touch screen device may calculate first coordinates of the touched point on the touch screen surface, and then, maps the external device to the first coordinates.

In addition, the touch screen device may execute user verification services that allow the external device to access the touch screen device or to access the object displayed on the first coordinates of the touch screen device using the user verification information stored in the external device.

Also, as described above, the external device may be another touch screen device in addition to the touch screen device. In this case, the touch screen device calculates first coordinates of the touched point on the touch screen surface, and then, performs a mapping operation of the calculated first coordinates to second coordinates that represent the touched point on the touch screen surface of another touch screen device through the communication channel.

In addition, the touch screen device may transmit a control signal, which allows the object represented on the first coordinates to be represented on the second coordinates, to the other touch screen device or may receive the control signal from the other touch screen device.

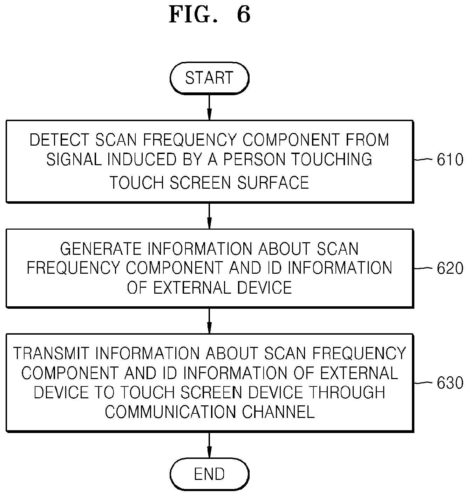

FIG. 6 is a flowchart illustrating a device information provision method for an external device according to another exemplary embodiment of the present invention.

Referring to FIG. 6, in operation 610, the external device detects a scan frequency component from a micro-current signal including a scan frequency component induced by touching a touch screen surface. For example, the external device may perform band-pass filtering on the micro-current signal by using a san frequency as a center frequency and perform tone-decoding on the band-pass filtered signal. The external device may be, for example, a cellular phone, a digital camera, a camcorder, a PDA, an MP3 player, or a PMP.

In operation 620, the external device generates information about the scan frequency component and ID information of the external device that has received the micro-current signal.

In operation 630, the external device transmits the information about the scan frequency component and the ID information to the touch screen device through a communication channel. The communication channel may be a wired or wireless channel using a PnP protocol such as an UPnP protocol.

When the scan frequency of a micro-current induced by touching the touch screen surface is temporarily changed by the touch screen device, the external device may repetitively perform operations 610 through 630.

In addition, when the external device is identified by the touch screen device and is mapped on the first coordinates that represent the touched point on the touch screen surface in the touch screen device, the external device may access the touch screen device using the user verification information stored therein or may execute the user verification process for accessing the object displayed on the first coordinates of the touch screen device.

In addition, the external device may be another touch screen device in addition to the touch screen device. In this case, the external device calculates second coordinates that represent the touched point of the touch screen surface of the external device, and may perform a mapping operation of the second coordinates to the first coordinates of the touch screen device.

In addition, for example, the external device may transmit a control signal, which allows the object displayed on the first coordinates to be displayed on the second coordinates, to the touch screen device or may receive the control signal from the touch screen device.

A program for executing a touch-screen based device identification method according to the present invention can be embodied as a computer-readable code on a computer-readable recording medium. The computer-readable recording medium is any data storage device that can store data which can be thereafter read by a computer system. Examples of computer-readable recording media include read-only memory (ROM), random-access memory (RAM), CD-ROMs, magnetic tapes, floppy disks, optical data storage devices, and carrier waves. The computer-readable recording medium can also be distributed over network of coupled computer systems so that the computer-readable code is stored and executed in a decentralized fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A device identification apparatus for a touch screen device (450), the device identification apparatus comprising:
a touch sensing unit (455) which generates a signal induced by touching a touch screen surface of the touch screen device (450), wherein the signal is a micro-current signal including a scan frequency component;
a reception unit (460) which receives information about the signal propagated to an external device (410) through a person and detected by the external device (410) and an identification (ID) of the external device (410) through a communication channel (445); and
an identification unit (465) which identifies the external device (410) based on the received information about the signal and the received ID of the external device (410).

2. The device identification apparatus of claim 1, wherein the identification unit (465) determines that the touch screen device (450) is connected with the external device (410) having the received ID via the person if a scan frequency component included in the information about the signal is the same as a scan frequency component of the signal induced by touching the touch screen surface.

3. The device identification apparatus of claim 1, further comprising:
a coordinates calculation unit (475) which calculates first coordinates of the touched touch screen surface; and
a mapping unit (470) which maps the identified external device (410) to the calculated first coordinates of the touched touch screen surface.

4. The device identification apparatus of claim 1, wherein the external device (410) is another touch screen device (450) distinct from the touch screen device (450), and the device identification apparatus further comprises:
a coordinate calculating unit calculating first coordinates of the touched touch screen surface; and
a mapping unit (470) mapping second coordinates of touched touch screen surface of another touch screen device (450) to the first coordinates,
wherein the mapping unit (470) performs the mapping operation through the communication channel (445).

5. The device identification apparatus of claim 1, wherein the touch screen device (450) executes application services, which link the first coordinates with the second coordinates, based on the mapping result.

6. The device identification apparatus of claim 1, wherein the communication channel (445) is a wired or wireless channel using a plug and play (PnP) protocol including a universal PnP (UPnP) protocol.

7. A device information provision apparatus for an external device (410), the device information provision apparatus comprising:
a detection unit (420) which detects a scan frequency component from a signal induced by touching a touch screen surface of a touch screen device (450) and propagated to the external device (410) through the person;
an information generation unit (435) which generates information about the scan frequency component and identification (ID) information of the external device (410); and
a transmission unit (440) which transmits the information about the scan frequency component and the ID information to a touch screen device (450) through a communication channel (445).

8. The device information provision apparatus of claim 7, wherein the signal is a micro-current signal including a scan frequency component.

9. The device information provision apparatus of claim 7, wherein the detection unit (420) comprises:
a band-pass filter (425) which performs band-pass filtering on the signal by using the scan frequency component as a center frequency; and
a tone-decoder (430) which performs tone-decoding on the band-pass filtered signal.

10. The device information provision apparatus of claim 7, wherein the external device (410) is another touch screen device (450) in addition to the touch screen device (450), and the device information provision apparatus further comprises:
a coordinate calculating unit calculating second coordinates of the touched touch screen surface of another touch screen device (450); and
a mapping unit (470) mapping the second coordinates of the touched touch screen surface to the first coordinates of the touch screen device (450), wherein
the mapping unit (470) performs the mapping operation through the communication channel (445).

11. The device information provision apparatus of claim 10, wherein the external device (410) executes application services, which link the first coordinates with the second coordinates, based on the mapping result.

12. The device information provision apparatus of claim 7, wherein the communication channel (445) is a wired or wireless channel using a plug and play (PnP) protocol including a universal PnP (UPnP) protocol.

13. A device identification method for a touch screen device (450), the device identification method comprising:
propagating a signal induced by touching a touch screen surface of the touch screen device (450) to an external device (410) through the person, wherein the signal is a micro-current signal including a scan frequency component;
receiving, at the touch screen device (450), information about the signal which is detected by the external device (410) and an identification (ID) of the external device (410) through a communication channel (445); and
identifying, at the touch screen device (450), the external device (410) based on the received information about the detected signal and the received ID of the external device (410).

14. A device information provision method for an external device (410), the device information provision method comprising:
detecting a scan frequency component from a signal induced by touching a touch screen surface of a touch screen device (450) and propagated to the external device (410) through the person;
generating information about the scan frequency component and identification (ID) information of the external device (410); and
transmitting the information about the scan frequency component and the ID information from the external device (410) to the touch screen device (450) through a communication channel (445).

15. A computer-readable recording medium having recorded thereon a program for executing a device identification method for a touch screen device (450), the device identification method comprising:
propagating a signal induced by touching a touch screen surface of the touch screen device (450) to an external device (410) through the person, wherein the signal is a micro-current signal including a scan frequency component;
receiving, at the touch screen device (450), information about the signal which propagated to and detected by the external device (410) and an identification (ID) of the external device (410) through a communication channel (445); and
identifying, at the touch screen device (450), the external device (410) based on the received information about the detected signal and the received ID of the external device (410).

16. A computer-readable recording medium having recorded thereon a program for executing a device information provision method for an external device (410), the device information provision method comprising:
detecting, at the external device (410), a scan frequency component from a signal induced by touching a touch screen surface of a touch screen device (450) and propagated to the external device (410) through the person;
generating, at the external device (410), information about the scan frequency component and identification (ID) information of the external device (410) that has received the signal; and
transmitting the information about the scan frequency component and the ID information from the external device (410) to the touch screen device (450) through a communication channel (445).

## Patentansprüche

1. Vorrichtungsidentifikationsvorrichtung für eine Berührungsschirmvorrichtung (450), wobei die Vorrichtungsidentifikationsvorrichtung Folgendes umfasst:
eine Berührungserfassungseinheit (455), die ein Signal erzeugt, das durch Berühren einer Berührungsschirmoberfläche der Berührungsschirmvorrichtung (450) verursacht wird, wobei das Signal ein Mikrostromsignal ist, das eine Scan-Frequenzkomponente umfasst;
eine Empfangseinheit (460), die Informationen über das Signal, das mittels einer Person zu einer externen Vorrichtung (410) ausgebreitet und durch die externe Vorrichtung (410) detektiert wird, und eine Identifikation (ID) der externen Vorrichtung (410) mittels eines Kommunikationskanals (445) empfängt; und
eine Identifikationseinheit (465), die die externe Vorrichtung (410) auf der Basis der empfangenen Informationen über das Signal und der empfangenen ID der externen Vorrichtung (410) identifiziert.

2. Vorrichtungsidentifikationsvorrichtung nach Anspruch 1, wobei die Identifikationseinheit (465) bestimmt, dass die Berührungsschirmvorrichtung (450) mit der externen Vorrichtung (410) mit der empfangenen ID über die Person verbunden ist, wenn eine in den Informationen über das Signal enthaltene Scan-Frequenzkomponente dieselbe wie eine Scan-Frequenzkomponente des durch Berühren der Berührungsschirmoberfläche verursachten Signals ist.

3. Vorrichtungsidentifikationsvorrichtung nach Anspruch 1, ferner umfassend:
eine Koordinatenberechnungseinheit (475), die erste Koordinaten der berührten Berührungsschirmoberfläche berechnet; und
eine Abbildungseinheit (470), die die identifizierte externe Vorrichtung (410) auf die berechneten ersten Koordinaten der berührten Berührungsschirmoberfläche abbildet.

4. Vorrichtungsidentifikationsvorrichtung nach Anspruch 1, wobei die externe Vorrichtung (410) eine von der Berührungsschirmvorrichtung (450) verschiedene andere Berührungsschirmvorrichtung (450) ist und die Vorrichtungsidentifikationsvorrichtung ferner Folgendes umfasst:
eine Koordinatenberechnungseinheit, die erste Koordinaten der berührten Berührungsschirmoberfläche berechnet; und
eine Abbildungseinheit (470), die zweite Koordinaten berührter Berührungsschirmoberfläche einer anderen Berührungsschirmvorrichtung (450) auf die ersten Koordinaten abbildet,
wobei die Abbildungseinheit (470) die Abbildungsoperation mittels des Kommunikationskanals (445) ausführt.

5. Vorrichtungsidentifikationsvorrichtung nach Anspruch 1, wobei die Berührungsschirmvorrichtung (450) auf der Basis des Abbildungsergebnisses die Anwendungsdienste ausführt, die die ersten Koordinaten mit den zweiten Koordinaten verknüpfen.

6. Vorrichtungsidentifikationsvorrichtung nach Anspruch 1, wobei der Kommunikationskanal (445) ein verdrahteter oder drahtloser Kanal ist, der ein PnP(Plug and Play)-Protokoll verwendet, das ein UPnP(Universal PnP)-Protokoll umfasst.

7. Vorrichtungsinformations-Bereitstellungsvorrichtung für eine externe Vorrichtung (410), wobei die Vorrichtungsinformations-Bereitstellungsvorrichtung Folgendes umfasst:
eine Detektionseinheit (420), die eine Scan-Frequenzkomponente aus einem Signal detektiert, das durch Berühren einer Berührungsschirmoberfläche einer Berührungsschirmvorrichtung (450) verursacht und mittels der Person zu der externen Vorrichtung (410) ausgebreitet wird;
eine Informationserzeugungseinheit (435), die Informationen über die Scan-Frequenzkomponente und Identifikations- bzw. ID-Informationen der externen Vorrichtung (410) erzeugt; und
eine Übertragungseinheit (440), die die Informationen über die Scan-Frequenzkomponente und die ID-Informationen mittels eines Kommunikationskanals (445) zu einer Berührungsschirmvorrichtung (450) sendet.

8. Vorrichtungsinformations-Bereitstellungsvorrichtung nach Anspruch 7, wobei das Signal ein Mikrostromsignal ist, das eine Scan-Frequenzkomponente umfasst.

9. Vorrichtungsinformations-Bereitstellungsvorrichtung nach Anspruch 7, wobei die Detektionseinheit (420) Folgendes umfasst:
ein Bandpassfilter (425), das Bandpassfilterung an dem Signal durch Verwendung der Scan-Frequenzkomponente als Mittenfrequenz ausführt; und
einen Tondecoder (430), der Tondecodierung an dem bandpassgefilterten Signal ausführt.

10. Vorrichtungsinformations-Bereitstellungsvorrichtung nach Anspruch 7, wobei die externe Vorrichtung (410) eine andere Berührungsschirmvorrichtung (450) zusätzlich zu der Berührungsschirmvorrichtung (450) ist und die Vorrichtungsinformations-Bereitstellungsvorrichtung ferner Folgendes umfasst:
eine Koordinatenberechnungseinheit, die zweite Koordinaten der berührten Berührungsschirmoberfläche einer anderen Berührungsschirmvorrichtung (450) berechnet; und
eine Abbildungseinheit (470), die die zweiten Koordinaten der berührten Berührungsschirmoberfläche auf die ersten Koordinaten der Berührungsschirmvorrichtung (450) abbildet, wobei
die Abbildungseinheit (470) die Abbildungsoperation mittels des Kommunikationskanals (445) ausführt.

11. Vorrichtungsinformations-Bereitstellungsvorrichtung nach Anspruch 10, wobei die externe Vorrichtung (410) auf der Basis des Abbildungsergebnisses Anwendungsdienste ausführt, die die ersten Koordinaten mit den zweiten Koordinaten verknüpfen.

12. Vorrichtungsinformations-Bereitstellungsvorrichtung nach Anspruch 7, wobei der Kommunikationskanal (445) ein verdrahteter oder drahtloser Kanal ist, der ein PnP(Plug and Play)-Protokoll verwendet, das ein UPnP(Universal PnP)-Protokoll umfasst.

13. Vorrichtungsidentifikationsverfahren für eine Berührungsschirmvorrichtung (450), wobei das Vorrichtungsidentifikationsverfahren Folgendes umfasst:
Ausbreiten eines durch Berühren einer Berührungsschirmoberfläche der Berührungsschirmvorrichtung (450) verursachten Signals zu einer externen Vorrichtung (410) mittels der Person, wobei das Signal ein Mikrostromsignal ist, das eine Scan-Frequenzkomponente umfasst;
Empfangen von Informationen über das Signal, das durch die externe Vorrichtung (410) detektiert wird, und einer Identifikation (ID) der externen Vorrichtung (410) in der Berührungsschirmvorrichtung (450) mittels eines Kommunikationskanals (445); und
Identifizieren der externen Vorrichtung (410) in der Berührungsschirmvorrichtung (450) auf der Basis der empfangenen Informationen über das detektierte Signal und der empfangenen ID der externen Vorrichtung (410).

14. Vorrichtungsinformations-Bereitstellungsverfahren für eine externe Vorrichtung (410), wobei das Vorrichtungsinformations-Bereitstellungsverfahren Folgendes umfasst:
Detektieren einer Scan-Frequenzkomponente aus einem Signal, das durch Berühren einer Berührungsschirmoberfläche einer Berührungsschirmvorrichtung (450) verursacht und mittels der Person zu der externen Vorrichtung (410) ausgebreitet wird;
Erzeugen von Informationen über die Scan-Frequenzkomponente und von Identifikations- bzw. ID-Informationen der externen Vorrichtung (410); und
Senden der Informationen über die Scan-Frequenzkomponente und der ID-Informationen von der externen Vorrichtung (410) zu der Berührungsschirmvorrichtung (450) mittels eines Kommunikationskanals (445).

15. Computerlesbares Aufzeichnungsmedium, auf dem ein Programm zum Ausführen eines Vorrichtungsidentifikationsverfahrens für eine Berührungsschirmvorrichtung (450) aufgezeichnet ist, wobei das Vorrichtungsidentifikationsverfahren Folgendes umfasst:
Ausbreiten eines durch Berühren einer Berührungsschirmoberfläche der Berührungsschirmvorrichtung (450) verursachten Signals zu einer externen Vorrichtung (410) mittels der Person, wobei das Signal ein Mikrostromsignal ist, das eine Scan-Frequenzkomponente umfasst;
Empfangen von Informationen über das Signal, das zu der externen Vorrichtung (410) ausgebreitet und durch die externe Vorrichtung (410) detektiert wird, und einer Identifikation (ID) der externen Vorrichtung (410) in der Berührungsschirmvorrichtung (450) mittels eines Kommunikationskanals (445); und
Identifizieren der externen Vorrichtung (410) in der Berührungsschirmvorrichtung (450) auf der Basis der empfangenen Informationen über das detektierte Signal und der empfangenen ID der externen Vorrichtung (410).

16. Computerlesbares Aufzeichnungsmedium, auf dem ein Programm zum Ausführen eines Vorrichtungsinformations-Bereitstellungsverfahrens für eine externe Vorrichtung (410) aufgezeichnet ist, wobei das Vorrichtungsinformations-Bereitstellungsverfahren Folgendes umfasst:
Detektieren einer Scan-Frequenzkomponente in der externen Vorrichtung (410) aus einem Signal, das durch Berühren einer Berührungsschirmoberfläche einer Berührungsschirmvorrichtung (450) verursacht und mittels der Person zu der externen Vorrichtung (410) ausgebreitet wird;
Erzeugen von Informationen über die Scan-Frequenzkomponente und Identifikations- bzw. ID-Informationen der externen Vorrichtung (410), die das Signal empfangen hat, in der externen Vorrichtung (410); und
Senden der Informationen über die Scan-Frequenzkomponente und der ID-Informationen von der externen Vorrichtung (410) zu der Berührungsschirmvorrichtung (450) mittels eines Kommunikationskanals (445).

## Revendications

1. Appareil d'identification de dispositif pour un dispositif à écran tactile (450), l'appareil d'identification de dispositif comprenant :
une unité d'activation par pression (455) qui génère un signal induit en touchant une surface d'écran tactile du dispositif à écran tactile (450), dans lequel le signal est un signal de micro-courant comprenant une composante de fréquence de balayage ;
une unité de réception (460) qui reçoit des informations concernant le signal propagé vers un dispositif externe (410) par une personne et détecté par le dispositif externe (410), et une identification (ID) du dispositif externe (410) au moyen d'un canal de communication (445) ; et
une unité d'identification (465) qui identifie le dispositif externe (410) en se basant sur les informations reçues concernant le signal et l'identification reçue du dispositif externe (410).

2. Appareil d'identification de dispositif selon la revendication 1, dans lequel l'unité d'identification (465) détermine que le dispositif à écran tactile (450) est raccordé au dispositif externe (410) ayant l'ID reçue par la personne si une composante de fréquence de balayage incluse dans les informations concernant le signal est la même qu'une composante de fréquence de balayage du signal induit en touchant la surface de l'écran tactile.

3. Appareil d'identification de dispositif selon la revendication 1, comprenant en outre :
une unité de calcul de coordonnées (475) qui calcule des premières coordonnées de la surface d'écran tactile touchée ; et
une unité de mise en correspondance (470) qui met en correspondance le dispositif externe identifié (410) avec les premières coordonnées calculées de la surface d'écran tactile touchée.

4. Appareil d'identification de dispositif selon la revendication 1, dans lequel le dispositif externe (410) est un autre dispositif à écran tactile (450) distinct du dispositif à écran tactile (450) et l'appareil d'identification de dispositif comprend en outre :
une unité de calcul de coordonnées qui calcule des premières coordonnées de la surface d'écran tactile touchée ; et
une unité de mise en correspondance (470) qui met en correspondance des secondes coordonnées d'une surface d'écran tactile touchée d'un autre dispositif à écran tactile (450) avec les premières coordonnées,
dans lequel l'unité de mise en correspondance (470) effectue l'opération de mise en correspondance au moyen du canal de communication (445).

5. Appareil d'identification de dispositif selon la revendication 1, dans lequel le dispositif à écran tactile (450) exécute des services d'application, qui lient les premières coordonnées aux secondes coordonnées en se basant sur le résultat de mise en correspondance.

6. Appareil d'identification de dispositif selon la revendication 1, dans lequel le canal de communication (445) est un canal câblé ou sans fil qui utilise un protocole prêt à l'emploi (PnP) comprenant un protocole PnP universel (UPnP).

7. Appareil de fourniture d'informations de dispositif pour un dispositif externe (410), l'appareil de fourniture d'informations de dispositif comprenant :
une unité de détection (420) qui détecte une composante de fréquence de balayage d'un signal induit en touchant une surface d'écran tactile d'un dispositif à écran tactile (450) et propagé vers le dispositif externe (410) par la personne ;
une unité de génération d'informations (435) qui génère des informations concernant la composante de fréquence de balayage ainsi que des informations d'identification (ID) du dispositif externe (410) ; et
une unité de transmission (440) qui transmet les informations concernant la composante de fréquence de balayage ainsi que les informations d'identification à un dispositif à écran tactile (450) au moyen d'un canal de communication (445) .

8. Appareil de fourniture d'informations de dispositif selon la revendication 7, dans lequel le signal est un signal de micro-courant comprenant une composante de fréquence de balayage.

9. Appareil de fourniture d'informations de dispositif selon la revendication 7, dans lequel l'unité de détection (420) comprend :
un filtre passe-bande (425) qui effectue un filtrage passe-bande sur le signal à l'aide de la composante de fréquence de balayage comme fréquence centrale ; et
un décodeur de tonalité (430) qui effectue un décodage de tonalité sur le signal ayant subi un filtrage passe-bande.

10. Appareil de fourniture d'informations de dispositif selon la revendication 7, dans lequel le dispositif externe (410) est un autre dispositif à écran tactile (450) en plus du dispositif à écran tactile (450) et l'appareil de fourniture d'informations de dispositif comprend en outre :
une unité de calcul de coordonnées qui calcule des secondes coordonnées de la surface d'écran tactile touchée d'un autre dispositif à écran tactile (450) ; et
une unité de mise en correspondance (470) qui met en correspondance les secondes coordonnées de la surface d'écran tactile touchée avec les premières coordonnées du dispositif à écran tactile (450) ; et
l'unité de mise en correspondance (470) effectue l'opération de mise en correspondance au moyen du canal de communication (445).

11. Appareil de fourniture d'informations de dispositif selon la revendication 10, dans lequel le dispositif externe (410) exécute des services d'application, qui lient les premières coordonnées aux secondes coordonnées en se basant sur le résultat de mise en correspondance.

12. Appareil de fourniture d'informations de dispositif selon la revendication 7, dans lequel le canal de communication (445) est un canal câblé ou sans fil qui utilise un protocole prêt à l'emploi (PnP) comprenant un protocole PnP universel (UPnP).

13. Procédé d'identification de dispositif pour un dispositif à écran tactile (450), le procédé d'identification de dispositif consistant à :
propager un signal induit en touchant une surface d'écran tactile du dispositif à écran tactile (450) vers un dispositif externe (410) par la personne, dans lequel le signal est un signal de micro-courant comprenant une composante de fréquence de balayage ;
recevoir, au niveau du dispositif à écran tactile (450), des informations concernant le signal qui est détecté par le dispositif externe (410), et une identification (ID) du dispositif externe (410) au moyen d'un canal de communication (445) ; et
identifier, au niveau du dispositif à écran tactile (450), le dispositif externe (410) en se basant sur les informations reçues concernant le signal détecté et l'identification reçue du dispositif externe (410).

14. Procédé d'identification de dispositif pour un dispositif externe (410), le procédé d'identification de dispositif consistant à :
détecter une composante de fréquence de balayage d'un signal induit en touchant une surface d'écran tactile d'un dispositif à écran tactile (450) et propagé vers le dispositif externe (410) par la personne ;
générer des informations concernant la composante de fréquence de balayage ainsi que des informations d'identification (ID) du dispositif externe (410) ; et
transmettre les informations concernant la composante de fréquence de balayage ainsi que les informations d'identification depuis le dispositif externe (410) au dispositif à écran tactile (450) au moyen d'un canal de communication (445).

15. Support d'enregistrement lisible par un ordinateur sur lequel est enregistré un programme pour exécuter un procédé d'identification de dispositif pour un dispositif à écran tactile (450), le procédé d'identification de dispositif consistant à :
propager un signal induit en touchant une surface d'écran tactile du dispositif à écran tactile (450) vers un dispositif externe (410) par la personne, dans lequel le signal est un signal de micro-courant comprenant une composante de fréquence de balayage ;
recevoir, au niveau du dispositif à écran tactile (450), des informations concernant le signal qui est propagé vers le dispositif externe (410) et détecté par ce dernier, et une identification (ID) du dispositif externe (410) au moyen d'un canal de communication (445) ; et
identifier, au niveau du dispositif à écran tactile (450), le dispositif externe (410) en se basant sur les informations reçues concernant le signal détecté et l'identification reçue du dispositif externe (410).

16. Support d'enregistrement lisible par un ordinateur sur lequel est enregistré un programme pour exécuter un procédé de fourniture d'informations de dispositif pour un dispositif externe (410), le procédé de fourniture d'informations de dispositif consistant à :
détecter, au niveau du dispositif externe (410), une composante de fréquence de balayage d'un signal induit en touchant une surface d'écran tactile d'un dispositif à écran tactile (450) et propagé vers le dispositif externe (410) par la personne ;
générer, au niveau du dispositif externe (410), des informations concernant la composante de fréquence de balayage ainsi que des informations d'identification (ID) du dispositif externe (410) qui a reçu le signal ; et
transmettre les informations concernant la composante de fréquence de balayage ainsi que les informations d'identification depuis le dispositif externe (410) au dispositif à écran tactile (450) au moyen d'un canal de communication (445).
